# EUROPÄISCHE PATENTSCHRIFT

(11) **EP 1 544 795 B1**
(45) Veröffentlichungstag und Bekanntmachung des Hinweises auf die Patenterteilung: **10.10.2007**
(21) Anmeldenummer: 03029034.0
(22) Anmeldetag: 16.12.2003
(51) Int. Cl.: G06T 7/00, G06K 9/68

(54) **Verfahren und Gerät zur Identifikation eines Objektes in einem Kamerabild**
Method and device for identifying an object in an image of a camera
Procédé et appareil pour identifier un objet dans une image d'une caméra

(43) Veröffentlichungstag der Anmeldung: 22.06.2005
(73) Patentinhaber: SIEMENS AKTIENGESELLSCHAFT, 80333 München (DE)
(72) Erfinder: Bock, Gerhard, 82131 Gauting (DE); Simon, Markus, 81673 München (DE)

(56) Entgegenhaltungen:
- COORS V ET AL: "Matching buildings: pose estimation in an urban environment" AUGMENTED REALITY, 2000. (ISAR 2000). PROCEEDINGS. IEEE AND ACM INTERNATIONAL SYMPOSIUM ON MUNICH, GERMANY 5-6 OCT. 2000, PISCATAWAY, NJ, USA,IEEE, US, 5. Oktober 2000 (2000-10-05), Seiten 89-92, XP010520315 ISBN: 0-7695-0846-4
- NAGAO M: "Control Strategies in Pattern Analysis" PATTERN RECOGNITION, Bd. 17, Nr. 1, 1984, Seiten 45-56, XP002279238

## Beschreibung

Die Erfindung betrifft ein Verfahren zur Identifikation eines Objekts in einem Kamerabild.

Unter dem Begriff "Augmented Reality Applikation" sind Kamera-Anwendungen bekannt, bei denen beispielsweise Text-Informationen oder modellierte künstliche Objekte in einer gefilmten realen Umgebung an jeweils zugeordneten realen Objekten zusätzlich angezeigt werden. Zur Einblendung von zusätzlichen Informationen in ein aktuelles Kamerabild müssen die entsprechenden zugeordneten Objekte der realen Umgebung schnell und zuverlässig identifiziert werden. Zu diesem Zweck werden bekannte Methoden der digitalen Bildverarbeitung verwendet, die insbesondere in kantenbasierte und in texturbasierte Bildanalyseverfahren unterteilt sind.

Während erstere zur Erkennung von Kanten eines Objekts optimiert sind, sind letztere zur Erkennung einer Textur bzw. eines Musters des Objekts optimiert. Beispielsweise erfolgt eine Texturanalyse mit Hilfe einer Fourieranalyse im Frequenzraum. Eine sichere Objekterkennung bzw. Objektidentifikation ist mit den Methoden der herkömmlichen digitalen Bildverarbeitung nur dann zu gewährleisten, wenn das jeweils verwendete Bildanalyseverfahren auf die jeweiligen objektspezifischen Merkmale abgestimmt ist.

Für die gleichzeitige Erkennung einer Vielzahl von Objekten einer mit Hilfe einer Kamera aufgezeichneten realen Umgebung muss eine Bildinformation aus der Umgebung gewonnen und sowohl schrittweise als auch merkmalsabhängig untersucht werden. Nachfolgend wird dann ein geeignetes Bildanalyseverfahren zur Objekterkennung ausgewählt. Derartige Untersuchungsverfahren verursachen im allgemeinen einen hohen Berechnungsaufwand und werden aus diesem Grund bei einer Vielzahl kommerzieller Kamera-Anwendungen nicht verwendet. Dies gilt insbesondere für Einzelbild- oder Video-Kameras mit Funkkommunikationsendgerät, die Augmented Reality Applikationen beinhalten.

Herkömmliche Verfahren für Augmented Reality Applikationen werden aus diesem Grund mit Hilfe von vordefinierten Markern durchgeführt, die in einer gefilmten bzw. aufgezeichneten Umgebung installiert sind. Die verwendeten Bildanalyseverfahren sind auf geometrische Eigenschaften der Marker abgestimmt. Dadurch wird ermöglicht, dass eine Bildinformation nach spezifischen Eigenschaften der Marker untersucht wird. Nachteilig ist dabei die nur mit großem Aufwand durchzuführende Installation der Marker.

Zusätzlich müssen die oben genannten Bildanalyseverfahren bei einer schnell erfolgenden Veränderung der aufgezeichneten Umgebung von neuem initialisiert werden, da in diesem Fall ein gewonnenes Ergebnis verfälscht wird oder verloren geht.

V. Coors, T. Huch, U. Kretschmer: "Matching buildings: Pose estimation in an urban environment", Proceedings of the IEEE and ACM International Symposium on Augmented Reality 2000 (ISAR 2000), Munich, Germany, 5-6 Oct. 2000, offenbart ein "Augmented Reality"-System, bei dem die Position eines aktuellen Kamerabildes bezogen auf eine modellierte Umgebung durch Vergleich des aktuellen Kamerabildes mit aus dem Modell abgeleiteten virtuellen Bildern bestimmt wird.

Es ist daher Aufgabe der vorliegenden Erfindung, ein schnell durchzuführendes, zuverlässiges Verfahren zur Objektidentifikation anzugeben.

Diese Aufgabe wird durch ein Verfahren mit den Merkmalen des Patentanspruchs 1 gelöst. Vorteilhafte Weiterbildungen sind in den Unteransprüchen angegeben.

Beim erfindungsgemäßen Verfahren wird beispielsweise durch eine Kamerabewegung eine Umgebung gefilmt bzw. aufgezeichnet. In der aufgezeichneten Umgebung werden signifikante Objekte bestimmt, denen einerseits jeweilige Positionsinformationen und andererseits ein zur Objekt-Identifikation geeignetes Bildanalyseverfahren spezifisch zugeordnet werden.

Wird nun zu einem späteren Zeitpunkt ein Ausschnitt der realen Umgebung mit Hilfe der Kamera als aktuelles Kamerabild aufgezeichnet, so wird das aktuelle Kamerabild mit der aufgezeichneten Umgebung verglichen.

Mit Hilfe eines bildverarbeitungsgestützten Bewegungsschätzers, der aus Augmented Reality Spielanwendungen auf Funkkommunikationsendgeräten bekannt ist, wird die Position des Umgebungsausschnitts in der aufgezeichneten Umgebung ermittelt. Zur Identifikation von Objekten des Umgebungsausschnitts wird das Bildanalyseverfahren verwendet, das seiner zugeordneten Position in der aufgezeichneten Umgebung entsprechend der ermittelten Position des Umgebungsausschnitts am nächsten liegt.

Das erfindungsgemäße Verfahren erhöht somit eine Wahrscheinlichkeit einer fehlerfreien Objektidentifikation, da das Bildidentifikationsverfahren positionsabhängig ausgewählt wird.

Durch den stetigen Vergleich einer einmalig aufgezeichneten Umgebung mit den aktuellen Kamerabildern wird im Vergleich zum Stand der Technik Rechenzeit eingespart.

Schnelle Kamerabewegungen bzw. Störungen im aktuellen Kamerabild haben bei der Auswahl des Objektidentifikationsverfahrens keinen störenden Einfluss, da die jeweilige Positionsbestimmung schnell wiederholbar ist.

Durch das erfindungsgemäße Verfahren wird eine Identifikationssicherheit einzelner Objekte erhöht, ohne dabei Marker an Objekten der Umgebung platzieren zu müssen.

Im Folgenden wird die Erfindung anhand einer Zeichnung näher erläutert.

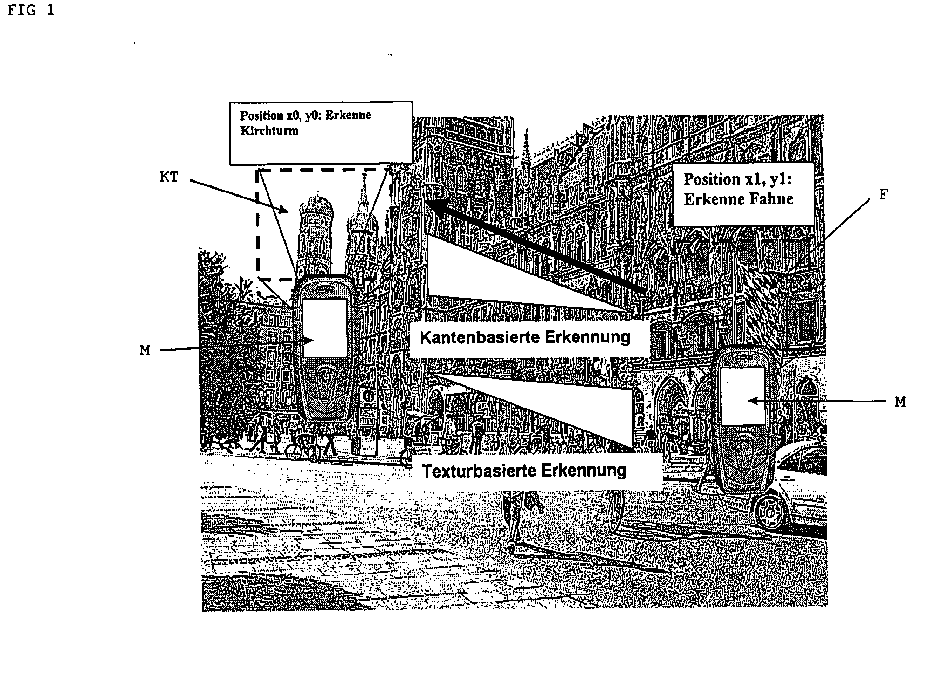

Dabei zeigt FIG 1 einen Ausschnitt einer Fußgängerzone im innerstädtischen Bereich als aufgezeichnete Umgebung.
Ein in den Ausschnitt der Fußgängerzone eingeblendetes Funkkommunikationsendgerät M verfügt über eine integrierter Kamera und über eine Prozessoreinheit. Durch eine Bewegung der Kamera in einem Winkelbereich wird die Fußgängerzone als Umgebung aufgezeichnet und abgespeichert.

In der aufgezeichneten Umgebung werden beispielsweise als signifikante Objekte ein Kirchturm KT und eine Fahne F detektiert. Dem Kirchturm KT wird eine erste Position x0, y0 und ein kantenbasiertes Bildanalyseverfahren zugeordnet, während der Fahne F eine zweite Position x1, y1 und ein texturbasiertes Bildanalyseverfahren zugeordnet wird.

Zeigt ein aktuelles Kamerabild nach einigen Bildwechseln auf den Kirchturm KT, so wird das aktuelle Kamerabild mit der aufgezeichneten Umgebung verglichen. Als Position des aktuellen Kamerabildes wird in Bezug auf die modellierte Umgebung die erste Position x0, y0 ermittelt. Da dieser Position x0, y0 ein kantenbasiertes Bildanalyseverfahren zugeordnet ist, wird dieses ausgewählt und zur Identifikation des Kirchturms KT verwendet.

Dadurch wird beispielsweise bei einer Augmented Reality Applikation ermöglicht, Text- oder Objektinformationen, die dem Kirchturm KT zugeordnet sind, im aktuellen Kamerabild ortsfest am Kirchturm KT anzuzeigen.

Vorteilhaft wird bei der Auswahl des Bildanalyseverfahrens eine Umgebungswahrscheinlichkeit berücksichtigt. Für die erste Position x0, y0 und deren nähere Umgebung wird bevorzugt ein kantenbasiertes Bildanalyseverfahren zur Objekterkennung verwendet, während für die zweite Position x1, y1 und deren nähere Umgebung bevorzugt ein texturbasiertes Bildanalysever fahren zur Objekterkennung bzw. -identifikation verwendet wird. Die Merkmalsanalyse ist somit auf den jeweiligen Bildinhalt optimal abgestimmt.

Vorteilhaft erfolgt eine dynamische, adaptive Anpassung des Bildanalyseverfahrens an die Objekte des aktuellen Kamerabildes. Dies hat zur Folge, dass bei einem Wechsel des Kamerabildes von der ersten Position x0, y0 zur zweiten Position x1, y1 die Bildanalyse von einem kantenbasierten Analyseverfahren auf ein texturbasiertes Analyseverfahren schrittweise umgestellt und somit adaptiv an die Umgebung angepasst wird.

Die jeweiligen Daten für die oben genannten Positionen x0, y0 und x1, y1 sowie die jeweils zugeordneten Bildanalyseverfahren werden vorteilhaft in einer Look-Up-Tabelle des Funkkommunikationsendgeräts abgelegt und stehen somit jederzeit schnell zur Verfügung.

Vorstehend wurde ein aktuelles Kamerabild mit der aufgezeichneten Umgebung verglichen. Alternativ dazu ist es auch möglich, ein der aufgezeichneten Umgebung entsprechendes Modell zu bilden und das aktuelle Kamerabild mit dieser modellierten Umgebung zu vergleichen. Die Umgebung könnte beispielsweise als Rechenmodell dreidimensional nachgebildet werden. Für die erfindungsgemäßen Verfahrensschritte wird somit anstelle der aufgezeichneten Umgebung die als Modell nachgebildete Umgebung verwendet.

## Patentansprüche

1. Verfahren zur Identifikation von Objekten (KT, F) in einem Kamerabild,
- bei dem durch eine Kamera eine Umgebung aufgezeichnet wird,
- bei dem in der aufgezeichneten Umgebung oder in einem der aufgezeichneten Umgebung entsprechenden Modell Objekte bestimmt werden, denen jeweils Positionsinformationen ((x₀, y₀), (x₁, y₁)) und ein spezifisches Bildanalyseverfahren zugeordnet werden,
- bei dem ein aktuelles Kamerabild mit der aufgezeichneten oder modellierten Umgebung verglichen wird,
- bei dem die Position des aktuellen Kamerabildes (x₀, y₀), (x₁, y₁) bezogen auf die aufgezeichnete oder modellierte Umgebung ermittelt wird, und
- bei dem zur Identifikation von Objekten im aktuellen Kamerabild das Bildanalyseverfahren verwendet wird, das seiner zugeordneten Position in der aufgezeichneten oder modellierten Umgebung entsprechend der ermittelten Position des aktuellen Kamerabildes am nächsten liegt.

2. Verfahren nach Anspruch 1, bei dem bei einer Veränderung des aktuellen Kamerabildes die Auswahl des Bildanalyseverfahrens positionsabhängig und adaptiv aktualisiert wird.

3. Verfahren nach Anspruch 1 oder 2, bei dem die positionsabhängig zugeordneten Bildanalyseverfahren zur Erkennung von Merkmalen benachbarter Objekte dynamisch angepasst werden.

4. Verfahren nach Anspruch 1, bei dem zur Modellierung der Umgebung unterabgetastete Objekte verwendet werden.

5. Verfahren nach einem der vorhergehenden Ansprüche, **dadurch gekennzeichnet, dass** das Kamerabild durch eine Video- oder Einzelbild-Kamera eines Funkkommunikationsendgeräts gebildet wird und die Objektidentifikation mit Hilfe einer Prozessoreinheit des Funkkommunikationsendgeräts durchgeführt wird.

6. Funkkommunikationsendgerät (M) mit Kamera und mit Mitteln zur Durchführung aller Schritte des Verfahrens nach einem der Ansprüche 1 bis 5.

## Claims

1. Method for identification of objects (KT, F) in a camera image,
- in which an environment is recorded using a camera,
- in which objects are determined in the recorded environment or in a model corresponding to the recorded environment, with position information ((x0, y0), (x1, y1)) and a specific image analysis method being assigned to said objects,
- in which a current camera image is compared with the recorded or modelled environment,
- in which the position of the current camera image ((x0, y0), (x1, y1)) is determined in relation to the recorded or modelled environment, and
- in which in order to identify objects in the current camera image the image analysis method is used which is nearest to its assigned position in the recorded or modelled environment in accordance with the determined position of the current camera image.

2. Method according to claim 1, wherein the selection of the image analysis method is updated position-dependently and adaptively when there is a change in the current camera image.

3. Method according to claim 1 or 2, wherein the image analysis method assigned on a position-dependent basis is dynamically adapted to recognise features of adjacent objects.

4. Method according to claim 1, wherein undersampled objects are used for modelling the environment.

5. Method according to one of the previous claims,
**characterised in that** the camera image is formed by a video or animation camera of a radio communication terminal and the object identification is performed with the aid of a processor unit of the radio communication terminal.

6. Radio communication terminal (M) with camera and with means for performing all steps in the method according to one of claims 1 to 5.

## Revendications

1. Procédé pour l'identification d'objets (KT, F) dans une image de caméra,
- dans lequel un environnement est enregistré par une caméra,
- dans lequel des objets sont définis dans l'environnement enregistré ou dans un modèle correspondant à l'environnement enregistré, objets auxquels chaque fois sont associées des informations de position (x0, y0), (x1, y1), et un procédé spécifique d'analyse d'image,
- dans lequel une image actuelle de caméra est comparée à l'environnement enregistré ou modélisé,
- dans lequel la position ((x0, y0), (x1, y1)) de l'image actuelle de caméra est déterminée par rapport à l'environnement enregistré ou modélisé, et
- dans lequel, pour l'identification d'objets dans l'image actuelle de caméra, on utilise le procédé d'analyse d'image qui se rapproche le plus de sa position associée dans l'environnement enregistré ou modélisé, correspondant à la position définie de l'image de caméra actuelle.

2. Procédé suivant la revendication 1, dans lequel, en cas d'une modification de l'image de caméra actuelle, le choix du procédé d'analyse d'image est actualisé de façon à dépendre de la position et de façon ajustée automatiquement.

3. Procédé suivant la revendication 1 ou 2, dans lequel les procédés d'analyse d'image associés dépendant de la position sont adaptés dynamiquement pour reconnaître des caractéristiques d'objets voisins.

4. Procédé suivant la revendication 1, dans lequel on utilise des objets par balayage secondaire pour modéliser l'environnement.

5. Procédé suivant l'une des revendications précédentes, **caractérisé en ce que** l'image de caméra est formée par une caméra vidéo ou une caméra à image unique d'un émetteur de communication radio et l'identification d'objet est exécutée à l'aide d'une unité de processeur de l'émetteur de communication radio.

6. Emetteur de communication radio (M), comportant une caméra et des moyens pour l'exécution de toutes les étapes du procédé selon les revendications 1 à 5.
